(19) Europäisches Patentamt
European Patent Office
Office européen des brevets

(11) **EP 2 501 856 B1**

(12) **EUROPEAN PATENT SPECIFICATION**

(45) Date of publication and mention
of the grant of the patent:
**19.10.2016 Bulletin 2016/42**

(51) Int Cl.:
*D21H 13/50* (2006.01)     *D21H 27/22* (2006.01)
*B31D 3/00* (2006.01)     *B29D 99/00* (2010.01)

(21) Application number: **10781787.6**

(22) Date of filing: **17.11.2010**

(86) International application number:
**PCT/US2010/057030**

(87) International publication number:
**WO 2011/062985 (26.05.2011 Gazette 2011/21)**

(54) **FOLDED CORE BASED ON CARBON FIBER PAPER AND ARTICLES MADE FROM SAME**

AUF KOHLENSTOFFFASERPAPIER BASIERENDER GEFALTETER KERN UND DARAUS HERGESTELLTE ARTIKEL

ÂME PLIÉE À PARTIR DE PAPIER DE FIBRES DE CARBONE ET ARTICLES OBTENUS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.11.2009 US 262969 P**

(43) Date of publication of application:
**26.09.2012 Bulletin 2012/39**

(73) Proprietor: **E. I. du Pont de Nemours and Company Wilmington, DE 19898 (US)**

(72) Inventors:
• **LEVIT, Mikhail, R.**
**Glen Allen**
**Virginia 23059 (US)**

• **KAWKA, Dariusz, Wlodzimierz**
**Midlothian**
**Virginia 23112 (US)**

(74) Representative: **Dannenberger, Oliver Andre**
**Abitz & Partner**
**Patentanwälte mbB**
**Postfach 86 01 09**
**81628 München (DE)**

(56) References cited:
**JP-A- 6 210 777      US-A- 4 540 624**
**US-A1- 2007 166 524      US-B1- 6 800 351**

**Description**

**BACKGROUND OF THE INVENTION**

**1. Field of the Invention.**

This invention relates to a folded core structure made from paper containing carbon fiber.

**2. Description of Related Art.**

Core structures for sandwich panels from high modulus high strength fiber nonwoven sheets, mostly in the form of honeycomb, are used in different applications but primarily in the aerospace industry where strength to weight or stiffness to weight ratios have very high values. For example, US Patent 5,137,768 to Lin describes a honeycomb core structure made from a high-density wet-laid nonwoven comprising 50 wt.% or more of p-aramid fiber with the rest of the composition being a binder and other additives.

Folded core structures can be made in a much more economical way in comparison with traditional honeycomb structures.

The challenge facing the producers of core from substrates of carbon paper is that carbon fibers are very brittle and are prone to fracturing and breaking during calendering of the paper. This presents significant problems as calendering to increase paper density is a necessary and important part of the process. A high fraction of broken carbon fiber caused by calendering will significantly impact the mechanical performance of the final core. There is a need therefore for a folded core structure from a high density calendered paper substrate containing carbon fiber having a minimum fraction of very short broken carbon fibers and, having the majority of carbon fibers of sufficient length to provide the desired properties in the final composite structure.

Japanese patent application 6-210777 discloses a honeycomb core that uses a mixture of aramid fibers and carbon fibers as a base sheet for the cell walls.

**BRIEF SUMMARY OF THE INVENTION**

This invention is directed to a folded core structure comprising a plurality of folded configurations, wherein:

(i) the folded configurations are formed from a paper comprising 20-85 weight percent of carbon fiber having a fiber cross-section aspect ratio of at least 1.5:1,

(i) the paper has a fiber volume fraction of at least 35%,
(ii) the carbon fiber has an arithmetic mean length of at least 0.5 mm, and
(iii) the carbon fiber has a length weighted mean length of at least 0.9 mm.

The invention is further directed to a composite panel containing a folded core structure.

The terms "fiber cross-section aspect ratio", "fiber volume fraction", "arithmetic mean length" and "length weighted mean length" have the definitions as set forth under **TEST METHODS.**

**BRIEF DESCRIPTION OF THE DRAWINGS**

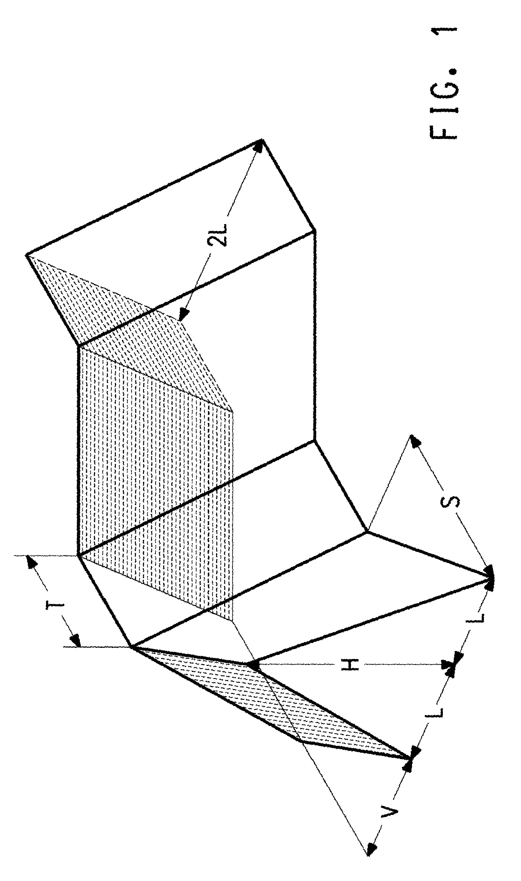

Figure 1 is an illustration of a folded core structure.

**DETAILED DESCRIPTION OF THE INVENTION**

This invention is directed to a non-cellular folded core structure made from a carbon fiber paper. A folded core is a 3-dimensional structure of folded geometric patterns folded from a relatively thin planar sheet material. An example of a folded structure is shown in Figure 1. Such folded or tessellated sheet structures are discussed in US patents 6,935,997 B2 and 6,800,351 B1. A chevron is a common pattern for three dimensional folded tessellated core structures.

The folded tessellated core structure comprises a paper that has been coated or impregnated with a thermoset resin.

The folded core of the present invention is formed from a paper comprising 20-85 weight percent of carbon fibers having a non-circular cross section having an aspect ratio of at least 1.5:1. The paper, prior to impregnation with resin, has a fiber volume fraction of at least 35%. The arithmetic mean length of carbon fiber is at least 0.5 mm and the length weighted mean length at least 0.9 mm.

Preferably the carbon fibers have a linear density in the range of from 0.1 to 3.0 denier per filament (dpf). A non-circular carbon fiber cross section coupled with the relatively small fiber linear density provides a paper, after calendering, having a low percentage of short or broken carbon fibers. Preferably the arithmetic mean length of the carbon fibers is at least 0.7 mm. Preferably the length weighted mean length of the carbon fibers is at least 1.2 mm. The fiber cross sections, for example, may be dog-bone, bean, oval, ribbon or strip shaped.

The thickness of the paper sheet used in this invention is dependent upon the end use or desired properties of the folded core and in some embodiments is typically from 1 to 5 mil (25 to 125 micrometers) thick. In some embodiments, the basis weight of the nonwoven sheet is from 0.5 to 6 ounces per square yard (15 to 200 grams per square meter).

In a further embodiment, the invention is directed to a folded core structure formed from a paper comprising 20-85 weight percent of carbon fibers having a non-circular cross section, 7.5-50 weight percent of aramid fiber and 7.5-30 weight percent of polymeric binder which, has a fiber volume fraction of at least 35%. The arithmetic mean length of carbon fiber is at least 0.5 mm and the length weighted mean length at least 0.9 mm.

Preferably the paper, prior to impregnation with resin, has a machine to cross direction tensile strength ratio no greater than 2.2 to maximize mechanical properties of the finished folded core.

Carbon fiber used in this invention may be in the form of short cut or chopped fiber, also known as floc. Floc is made by cutting continuous filament fibers into short lengths without significant fibrillation. An example of a suitable length range is from 1.5 mm to 20 mm. Carbon fibers suitable for use in this invention can be made from either polyacrylonitrilie (PAN) or pitch precursor using known technological methods, for example as described in: J.B. Donnet and R. C. Bansal. Carbon Fibers, Marcel Dekker, 1984. A non-round carbon fiber cross-section is formed during spinning of the precursor. Preferably the carbon fiber has a modulus of at least 1667 grams per dtex (1500 grams per denier) and a tenacity of at least 28 grams per dtex (25 grams per denier) defined by testing resin-impregnated and consolidated test specimens made from continuous filament yarn or tow.

If the carbon fiber length is less than 1.5 millimeters, it is generally too short to provide the final composite with adequate modulus and strength; if the floc length is more than 20 millimeters, it is very difficult to form uniform wet-laid webs. Carbon floc having a linear density of less than 0.2 dpf and especially less than 0.1 dpf, is difficult to produce with adequate cross sectional uniformity and reproducibility; if the floc linear density is more than 3.0 dpf, it is very difficult to form uniform papers of light to medium basis weights.

The surface of the carbon fibers may optionally be oxidized to improve their adhesion to the matrix resin used to coat the paper. Oxidation methods of wet oxidation, dry oxidation, anodic oxidation, and the like are known in the industry and are described in more detail in "Fibre Reinforcements for Composite Materials", Composite Materials Series, Volume 2, Editor: A.R. Bunsell, Elsevier, 1988".

Aramid fibers used in this invention can be in the form of floc, pulp, or a combination of thereof. As employed herein the term aramid means a polyamide wherein at least 85% of the amide (-CONH-) linkages are attached directly to two aromatic rings. Additives can be used with the aramid. In fact, it has been found that up to as much as 10 percent, by weight, of other polymeric material can be blended with the aramid or that copolymers can be used having as much as 10 percent of other diamine substituted for the diamine of the aramid or as much as 10 percent of other diacid chloride substituted for the diacid chloride of the aramid. The term "pulp", as used herein, means particles of fibrous material having a stalk and fibrils extending generally therefrom, wherein the stalk is generally columnar and 10 to 50 micrometers in diameter and the fibrils are fine, hair-like members generally attached to the stalk measuring only a fraction of a micrometer or a few micrometers in diameter and 10 to 100 micrometers long. Aramid fiber floc is of a similar length to carbon fiber floc. Both meta and para aramid fibers are suitable and are available from E.I. DuPont de Nemours, Richmond, VA under the tradenames Kevlar® and Nomex® and from Teijin Twaron, Conyers, GA under the tradename Twaron®. In one embodiment, the aramid fiber floc has a non-circular cross section.

Preferably all the floc fibers in the composition of the paper have a cross-section aspect ratio of at least 1.5:1.

The preferred pulp material is p-aramid. However a blend of p-aramid with other synthetic or natural fibers such as liquid crystal polyester, polyareneazole, meta-aramid, and cellulose can be utilized. One illustrative process for making aramid pulp is disclosed in United States Patent No. 5,084,136 to Haines et al.

Different thermoset and thermoplastic resins can be used as a polymeric binder in the paper of this invention. These resins can be supplied in the form of fibrids, flakes, powder, and floc. The term "fibrids" as used herein, means a very finely-divided polymer product of small, filmy, essentially two-dimensional, particles known having a length and width of 100 to 1000 micrometers and a thickness of 0.1 to 1 micrometer. Preferable types of binder resins are aramids, polyimides, phenolics, and epoxies. However, other types of the resins can also be used.

Fibrids are typically made by streaming a polymer solution into a coagulating bath of liquid that is immiscible with the solvent of the solution. The stream of polymer solution is subjected to strenuous shearing forces and turbulence as the polymer is coagulated. The fibrid material of this invention can be selected from meta or para-aramid or blends thereof. More preferably, the fibrid is a meta-aramid.

The paper of the folded core of this invention can include small amounts of inorganic particles including mica, vermiculite, and the like; the addition of these performance enhancing additives being to impart properties such as improved fire resistance, thermal conductivity, dimensional stability, and the like to the paper and the final core structure.

The fiber volume fraction in the paper of this invention is preferably between 35 to 70 percent of the total volume of paper. Such a range permits impregnation of the coating resin throughout the thickness of the paper thus providing an optimum paper to coating resin weight distribution ratio in the finished core. Preferably this paper to coating resin weight ratio is in the range from 8:1 to 1:1. The thickness of the paper used in this invention is dependent upon the end use or desired properties of the core structure. In some embodiments, the thickness is from 15 to 125 micrometers (0.6 to 5 mil). More preferably, the thickness is from 25 to 100 micrometers (1 to 4 mil). In some embodiments, the basis weight of the paper is from 10 to 100 grams per square meter (0.3 to 3 ounces per square yard).

The paper used to make the folded core of this invention can be formed on equipment of any scale, from laboratory screens to commercialsized papermaking machinery, including such commonly used machines as Fourdrinier or inclined wire paper machines. A typical process involves making a dispersion of fibrous material such as floc and/or pulp and fibrids in an aqueous liquid, draining the liquid from the dispersion to yield a wet composition and drying the wet paper composition. The dispersion can be made either by dispersing the fibers and then adding the fibrids or by dispersing the fibrids and then adding the fibers. The final dispersion can also be made by combining a dispersion of fibers with a dispersion of the fibrids; the dispersion can optionally include other additives such as inorganic materials. The concentration of fibers from the floc and pulp in the dispersion can range from 0.01 to 1.0 weight percent based on the total weight of the dispersion. An example of a suitable range for polymer binder concentration is that it should be equal to or less than 30 weight percent based on the total weight of solids. In a typical process, the liquid of the dispersion is generally water, but may include various other materials such as pH-adjusting materials, forming aids, surfactants, defoamers and the like. The aqueous liquid is usually drained from the dispersion by conducting the dispersion onto a screen or other perforated support, retaining the dispersed solids and then passing the liquid to yield a wet paper composition. The wet composition, once formed on the support, is usually further dewatered by vacuum or other pressure forces and further dried by evaporating the remaining liquid.

In one preferred embodiment, the fiber and the polymer binder in the form of fibrids can be slurried together to form a mix that is converted to paper on a wire screen or belt. Reference is made to United States Patents 4,698,267 and 4,729,921 to Tokarsky; 5,026,456 to Hesler et al.; 5,223,094 and 5,314,742 to Kirayoglu et al for illustrative processes for forming papers from aramid fibers and aramid fibrids.

Once the paper is formed, it has to be calendered to the desired void content/apparent density. An optional final step in the paper manufacturing process can include a surface treatment of the paper to enhance adhesion of the coating resin to the paper. This is carried out in an air, corona or plasma atmosphere. Alternative chemical or thermal surface modifications of the paper may also be appropriate.

Processes for converting web substrates into folded core structures are described in US patents 6,913,570 B2 and 7,115,089 B2 as well as US patent application 2007/0141376.

Typically, the process of making the folded core comprises steps of a) forming a repeating pattern of fold lines in the raw web material; b) initiating the formation of folds; c) further formation of the folds; d) stabilizing the three-dimensional folded configuration.

The resin impregnation on the paper sheet may be applied before forming the folded core shape or after core folding has been completed. A two stage impregnation process can also be used in which part of the resin is impregnated into the paper sheet before shape forming and the balance impregnated after shape forming. When the resin impregnation of the nonwoven sheet is conducted prior to shape forming it is preferred that the resin is partially cured. Such a partial curing process, known as B-staging, is well known in the composite materials industry. By B-stage we mean an intermediate stage in the polymerization reaction in which the resin softens with heat and is plastic and fusible but does not entirely dissolve or fuse. The B-staged substrate is still capable of further processing into the desired folded core shape.

When the resin impregnation is conducted after the core has been folded, it is normally done in a sequence of repeating steps of dipping followed by solvent removal and curing of the resin. Such impregnation processes are similar to those employed to make honeycomb core structures. The preferred final core densities (nonwoven sheet plus resin) are in the range of 20 to 150 kg/m$^3$. During the resin impregnation process, resin is absorbed into and coated onto the nonwoven sheet.

Depending on the final application of the folded core of this invention, different resins can be used to coat and impregnate the paper sheet. Such resins include phenolic, epoxy, polyester, polyamide, and polyimide resins. Phenolic and polyimide resins are preferable. Phenolic resins normally comply with United States Military Specification MIL-R-9299C. Combinations of these resins may also be utilized. Suitable resins are available from companies such Hexion Specialty Chemicals, Columbus, OH or Durez Corporation, Detroit, MI.

Folded core of the above invention may be used to make composite panels having facesheets bonded to at least one exterior surface of the folded core structure. The facesheet material can be a plastic sheet or plate, a fiber reinforced plastic (prepreg) or metal. The facesheets are attached to the core structure under pressure and usually with heat by an adhesive film or from the resin in the prepreg. The curing is carried out in a press, an oven or an autoclave. Such techniques are well understood by those skilled in the art.

## TEST METHODS

The fiber volume fraction of the paper (volume of the paper structure occupied by fibers) is calculated by the equation:

$$\text{Volume fraction of fibers (\%)} = 100 \times \text{(apparent density of the}$$

$$\text{paper)} \times \text{((weight fraction of fiber 1)/(density of fiber 1)} + \text{(weight fraction of}$$

$$\text{fiber 2)/(density of fiber 2)} + \ldots + \text{(weight fraction of fiber n)/(density of fiber n))},$$

where n is the total number of different fibers in the paper composition.

Paper apparent density is calculated using the paper thickness as measured by ASTM D374-99 and the basis weight as measured by ASTM D646-96. Fiber denier is measured using ASTM D1907-07.

The machine to cross direction ratio of tensile strength for the paper is defined by measuring paper tensile strength in the machine and cross directions in accordance with ASTM D828-97 and dividing the machine value by the cross direction value.

The arithmetic mean length and length average mean length of carbon fibers are determined by cutting single cell walls at their boundaries with the double walls, dissolving or decomposing the organic ingredients of the wall with sulfuric acid or other suitable liquid, depositing carbon fibers on glass or other suitable filter media and conducting microscopic analysis of carbon fiber length with a total count of measured carbon fibers being not less than 200. Only fibers with length of 0.01 mm or higher are counted. The arithmetic mean length is calculated based on the equation::

$$L\,\text{(arithm.)} = (N1 \times L1 + N2 \times L2 + \ldots)/((N1 + N2 + \ldots)$$

The length weighted mean length is calculated based on the equation:

$$L\,\text{(length weighted)} = (N1 \times L1^2 + N2 \times L2^2 + \ldots)/((N1 \times L1 + N2 \times L2 + \ldots),$$

where L1, L2 etc. are all measured lengths, and N1, N2 etc. is the number of fibers with a given length.

The aspect ratio of a carbon fiber cross-section is determined by measuring of largest (width) and smallest (height) dimensions of the fiber cross-section under a microscope and dividing the first number by the second number.

Modulus and tenacity of carbon fibers is measured in accordance with ASTM D 4018-99 for test specimens of continuous yarn or tow that have been resin impregnated and consolidated.

## EXAMPLES

### Example 1

A paper comprising carbon floc, p-aramid floc, p-aramid pulp, and m-aramid fibrids is formed on conventional paper forming equipment. The composition of the paper is 40 weight percent carbon fiber floc, 15 weight percent p-aramid floc, 30 weight percent of p-aramid pulp, and 15 weight percent m-aramid fibrids.

The carbon floc has a nominal filament linear density of 0.70 dtex per filament (0.62 denier per filament), a cross sectional aspect ratio of 3:1, a cut length of 3.2 mm, a tenacity of 24.1 grams per dtex (1.92 N/tex), and an initial modulus of 1889 grams per dtex (150 N/tex).

The p-aramid floc has a nominal filament linear density of 1.7 dtex per filament (1.5 denier per filament), a cut length of 6.4 mm, a tenacity of 26.8 grams per dtex (2.13 N/tex), and initial modulus of 1044 grams per dtex (83 N/tex).

The p-aramid pulp is produced from the described p-aramid floc by high shear refining to a Canadian Standard Freeness (CSF) of about 180 ml. The meta-aramid fibrids are made as described in US Patent 3,756,908 to Gross.

The paper is calendered at 330° C to produce a finished paper having a thickness of 99 micrometers, a basis weight of 84.8 g/m$^2$ (2.5 oz/yd$^2$), an apparent density of 0.85 g/cm$^3$, a fiber volume fraction of 44% and a machine to cross directional tensile strength ratio of 1.1. The arithmetic mean length of carbon fibers in the paper is at least 0.5 mm and the length weighted mean length at least 0.9 mm.

The calendered paper sheet was impregnated with a resole type phenolic resin having a solids content of 35 wt.% and a viscosity of 70 mPa* sec., the solvent (methanol/Dowanol PM) was evaporated and the resin partially cured to a B-stage thus producing a resin impregnated nonwoven sheet (prepreg). A folded core was then formed from this preimpregnated B-staged material in accordance with US Patent 6,913,570 to Kehrle. A zig-zag fold pattern as shown in Figure 1 was made. The geometrical parameters of the core were: V = 14.26 mm, T = 5.00 mm, S = 4.63 mm, L = 10.62 mm, H = 30.00 mm. The resin was completely cured by heat treatment of the final core at 180°C for 1.5 hours. The finished folded core structure had a density of 25.8 kg/m3 and a resin content of 40 % of the total core weight. The arithmetic mean length of carbon fibers in the cell wall is at least 0.5 mm and the length weighted mean length at least 0.9 mm.

**Comparative Example A**

A paper is made as in Example 1 but with carbon fiber having a circular cross section, that is, having a nominal aspect ratio of 1:1. The final paper will have a thickness of 99 micrometers, a basis weight of 84.8 g/m$^2$ (2.5 oz/yd$^2$), an apparent density of 0.85 g/cm$^3$, a fiber volume fraction of 44% and a machine to cross directional tensile strength ratio of 1.1.

A folded core structure is made from this paper in the same manner as in Example 1. The arithmetic mean length of carbon fibers in the paper is less than 0.5 mm and the length weighted mean length is less than 0.9 mm.

For the same folded core dimensions, the same final core density and the same resin content, the core of the current invention made from paper having carbon fiber of a non-circular cross section has improved shear strength in comparison with other carbon fiber paper cores in which the carbon fibers have a substantially circular cross section.

**Example 2**

Two prepreg facesheets are placed on either side of a 10mm thick slice of core from Example 1. The prepreg is 8552 epoxy resin on G0803 style carbon fiber fabric available from Hexcel Corporation, Dublin, CA. The resin content in the prepreg is 35%. A release layer is placed on both outer surfaces of the prepreg and the prepreg-honeycomb assembly cured in a press at 180°C for 120 minutes to produce a sandwich panel.

**Claims**

1. A folded core structure comprising a plurality of folded configurations wherein the folded configurations are formed from a paper comprising 20-85 weight percent of carbon fiber, **characterized in that**

   (i) the carbon fiber has a fiber cross-section aspect ratio of at least 1.5:1,
   (ii) the paper has a fiber volume fraction of at least 35%,
   (iii) the carbon fiber has an arithmetic mean length of at least 0.5 mm, and
   (vi) the carbon fiber has a length weighted mean length of at least 0.9 mm.

2. A folded core structure according to claim 1 wherein the carbon fibers have a linear density in the range of from 0.1 to 3.0 dpf.

3. A folded core structure according to claim 1 or 2 wherein the arithmetic mean length of carbon fiber is at least 0.7 mm and length weighted mean length is at least 1.2 mm.

4. A folded core structure according claim 1 wherein the paper has a fiber volume fraction of at least 45%.

5. A folded core structure according to any one of claims 1 to 4 wherein, prior to impregnation with resin, the machine to cross direction tensile strength ratio of the paper is no greater than 2.2.

6. A folded core structure according to claim 1 wherein the carbon fiber has an elongation at break of at least 1.8%.

7. A core structure according to claim 1 wherein the paper further comprises 10-50 weight percent of aramid fiber, and 10-30 weight percent of polymeric binder.

8. A core structure according to any one of claims 1 to 7 wherein all floc fibers in the paper composition have a non-circular cross section aspect ratio of at least 1.5:1.

9. A core structure according to any one of claims 1 to 8 wherein the paper is impregnated with resin.

10. A core structure of claim 9 wherein the resin is selected from the group consisting of phenolic, polyimide, epoxy and combinations thereof.

11. A core structure according to claim 9 wherein the impregnated paper has a paper to resin weight ratio in the range of from 8:1 to 1:1.

12. A composite panel comprising a core structure according to any one of claims 1 to 11 and at least one facesheet attached to at least one exterior surface of the core structure.

13. A composite panel according to claim 12, wherein the facesheet is made from resin impregnated fiber, plastic or metal.

**Patentansprüche**

1. Gefaltete Kernstruktur umfassend eine Mehrzahl gefalteter Konfigurationen, wobei die gefalteten Konfigurationen aus einem Papier gebildet sind, dass 20-85 Gewichtsprozent Kohlenstofffaser umfasst, **dadurch gekennzeichnet, dass**

   (i) die Kohlenstofffaser ein Faserquerschnittsseitenverhältnis von mindestens 1,5:1 aufweist,
   (ii) das Papier eine Faservolumenfraktion von mindestens 35 % aufweist,
   (iii) die Kohlenstofffaser eine arithmetische Mittellänge von mindestens 0,5 mm aufweist und
   (vi) die Kohlenstofffaser eine längengewichtete mittlere Länge von mindestens 0,9 mm aufweist.

2. Gefaltete Kernstruktur nach Anspruch 1, wobei die Kohlenstofffasern eine lineare Dichte im Bereich von 0,1 bis 3,0 dpf aufweisen.

3. Gefaltete Kernstruktur nach Anspruch 1 oder 2, wobei die arithmetische Mittellänge der Kohlenstofffaser mindestens 0,7 mm und die längengewichtete mittlere Länge mindestens 1,2 mm beträgt.

4. Gefaltete Kernstruktur nach Anspruch 1, wobei das Papier eine Faservolumenfraktion von mindestens 45 % aufweist.

5. Gefaltete Kernstruktur nach irgendeinem der Ansprüche 1 bis 4, wobei, vor dem Imprägnieren mit Harz, das Zugfestigkeitsverhältnis in Maschinen- zu Querrichtung des Papiers nicht mehr als 2,2 beträgt.

6. Gefaltete Kernstruktur nach Anspruch 1, wobei die Kohlenstofffaser eine Bruchdehnung von mindestens 1,8 % aufweist.

7. Kernstruktur nach Anspruch 1, wobei das Papier ferner 10-50 Gewichtsprozent Aramidfaser und 10-30 Gewichtsprozent polymeres Bindemittel umfasst.

8. Kernstruktur nach einem der Ansprüche 1 bis 7, wobei alle Flockfasern in der Papierzusammensetzung ein nichtrundes Querschnittsseitenverhältnis von mindestens 1,5:1 aufweisen.

9. Kernstruktur nach einem der Ansprüche 1 bis 8, wobei das Papier mit Harz imprägniert wird.

10. Kernstruktur nach Anspruch 9, wobei das Harz aus der Gruppe ausgewählt wird bestehend aus phenolischem, Polyimid, Epoxid und Kombinationen davon.

11. Kernstruktur nach Anspruch 9, wobei das imprägnierte Papier ein Gewichtsverhältnis von Papier zu Harz im Bereich von 8:1 bis 1:1 aufweist.

12. Verbundstoffplatte umfassend eine Kernstruktur nach einem der Ansprüche 1 bis 11 und mindestens eine Verkleidungsplatte, die an mindestens einer Außenfläche der Kernstruktur befestigt ist.

13. Verbundstoffplatte nach Anspruch 12, wobei die Verkleidungsplatte aus mit Harz imprägnierter Faser, Kunststoff oder Metall hergestellt ist.

**Revendications**

1. Structure de noyau pliée comprenant une pluralité de configurations pliées où les configurations pliées sont formées d'un papier comprenant 20-85 % en poids de fibre de carbone, **caractérisée en ce que**

    (i) la fibre de carbone a un rapport de côtés en coupe transversale de fibre d'au moins 1,5:1,
    (ii) le papier a une fraction de volume de fibre d'au moins 35 %,
    (iii) la fibre de carbone a une longueur moyenne arithmétique d'au moins 0,5 mm, et
    (iv) la fibre de carbone a une longueur moyenne pondérée en longueur d'au moins 0,9 mm.

2. Structure de noyau pliée selon la revendication 1, dans laquelle les fibres de carbone ont une densité linéaire dans la plage de 0,1 à 3,0 dpf.

3. Structure de noyau pliée selon la revendication 1 ou 2, dans laquelle la longueur moyenne arithmétique de la fibre de carbone est d'au moins 0,7 mm et la longueur moyenne pondérée en longueur est d'au moins 1,2 mm.

4. Structure de noyau pliée selon la revendication 1, dans laquelle le papier a une fraction de volume de fibre d'au moins 45 %.

5. Structure de noyau pliée selon l'une quelconque des revendications 1 à 4, dans laquelle, préalablement à l'imprégnation avec de la résine, le rapport de limite d'élasticité de la direction de la machine à la direction transversale du papier n'est pas supérieur à 2,2.

6. Structure de noyau pliée selon la revendication 1, dans laquelle la fibre de carbone a un allongement à la rupture d'au moins 1,8 %.

7. Structure de noyau selon la revendication 1, dans laquelle le papier comprend en outre 10-50 pour cent en poids de fibre d'aramide, et 10-30 pour cent en poids de liant polymère.

8. Structure de noyau selon l'une quelconque des revendications 1 à 7, dans laquelle toutes les fibres à flocs dans la composition du papier ont un rapport de côtés en coupe transversale non circulaire d'au moins 1,5:1.

9. Structure de noyau selon l'une quelconque des revendications 1 à 8, dans laquelle le papier est imprégné de résine.

10. Structure de noyau selon la revendication 9, dans laquelle la résine est sélectionnée parmi le groupe consistant en résine phénolique, polyimide, époxy et des combinaisons de celles-ci.

11. Structure de noyau selon la revendication 9, dans laquelle le papier imprégné a un rapport pondéral de papier à résine dans la plage de 8:1 à 1:1.

12. Panneau composite comprenant une structure de noyau selon l'une quelconque des revendications 1 à 11 et au moins une feuille de face attachée à au moins une surface extérieure de la structure de noyau.

13. Panneau composite selon la revendication 12, dans lequel la feuille de face est faite en fibre imprégnée de résine, en plastique ou en métal.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5137768 A, Lin
- JP 6210777 A
- US 6935997 B2
- US 6800351 B1
- US 5084136 A, Haines
- US 4698267 A
- US 4729921 A, Tokarsky
- US 5026456 A, Hesler
- US 5223094 A
- US 5314742 A, Kirayoglu
- US 6913570 B2
- US 7115089 B2
- US 20070141376 A
- US 3756908 A, Gross
- US 6913570 B, Kehrle

**Non-patent literature cited in the description**

- Fibre Reinforcements for Composite Materials. Composite Materials Series. Elsevier, 1988, vol. 2